# EUROPÄISCHE PATENTSCHRIFT

(11) **EP 2 783 770 B1**
(45) Veröffentlichungstag und Bekanntmachung des Hinweises auf die Patenterteilung: **16.09.2015**
(21) Anmeldenummer: 13161215.2
(22) Anmeldetag: 27.03.2013
(51) Int. Cl.: B21D 43/10, B25J 9/00, B25J 9/16

(54) **Vorrichtung und Verfahren zum Handhaben von Blechteilen an einer Werkzeugmaschine zum schneidenden Bearbeiten von Blechen**
Device and method for handling sheet metal parts on a machine tool for cutting sheet metal
Dispositif et procédé de manipulation de pièces en tôle sur une machine-outil destinée au traitement de découpe de tôles

(43) Veröffentlichungstag der Anmeldung: 01.10.2014
(73) Patentinhaber: TRUMPF Werkzeugmaschinen GmbH + Co. KG, 71254 Ditzingen (DE)
(72) Erfinder: Liere, Max, 71254 Ditzingen (DE)
(74) Vertreter: Kohler Schmid Möbus Patentanwälte

(56) Entgegenhaltungen:
- WO-A1-2009/146716

## Beschreibung

Die Erfindung betrifft eine maschinelle Handlingvorrichtung zum Handhaben von Blechteilen an einer Werkzeugmaschine zum schneidenden Bearbeiten von Blechen, mit einem Schwenkarm, der eine Schwenkachse aufweist, senkrecht zu welcher sich der Schwenkarm mit seiner Längsrichtung erstreckt und der mit einer Halteeinrichtung versehen ist, welche durch eine Schwenkbewegung des Schwenkarms um die Schwenkachse in eine Übernahme-Schwenkstellung und in einer Übergabe-Schwenkstellung schwenkbar ist, wobei an der Halteeinrichtung bei Übernahme-Schwenkstellung ein Blechteil festlegbar ist und wobei von der Halteeinrichtung bei Übergabe-Schwenkstellung ein an der Halteeinrichtung festgelegtes Blechteil freigebbar ist.

Die Erfindung betrifft des Weiteren eine mit einer Handlingvorrichtung der genannten Art ausgestattete maschinelle Anordnung zum schneidenden Bearbeiten von Blechen, ein mittels der Handlingvorrichtung durchgeführtes Verfahren zum Handhaben von Blechteilen an einer Werkzeugmaschine zum schneidenden Bearbeiten von Blechen sowie ein numerisches Bearbeitungsprogramm zum Betreiben der Handlingvorrichtung.

Gattungsgemäßer Stand der Technik ist bekannt aus WO 2009/146716 A1. Diese Druckschrift offenbart ein numerisch gesteuertes Verfahren und eine numerisch gesteuerte maschinelle Anordnung, im Falle derer eine Schneideinrichtung der maschinellen Anordnung aus einem auf einer Werkstückauflage abgelegten Rohblech sukzessive Fertigteile ausschneidet. Während die Schneideinrichtung noch das restliche Rohblech bearbeitet, werden bereits erstellte Fertigteile mittels einer neben der Werkstückauflage angeordneten maschinellen Entladeeinrichtung von der Werkstückauflage abgeführt. Die maschinelle Entladeeinrichtung ist mit einem horizontalen Schwenkarm versehen, der an einer vertikalen Tragsäule der maschinellen Entladeeinrichtung um eine vertikale Schwenkachse schwenkbar gelagert ist und der an seinem von der vertikalen Tragsäule abliegenden freien Ende eine Halteeinrichtung für die von der Werkstückauflage der maschinellen Anordnung abzuführenden Fertigteile aufweist. In einer auflagenahen Schwenkstellung nimmt die an dem Schwenkarm vorgesehene Halteeinrichtung die betreffenden Fertigteile an der Werkstückauflage auf. Anschließend schwenkt der Schwenkarm die Halteeinrichtung mit den daran fixierten Fertigteilen in eine auflageferne Schwenkstellung, in welcher die Fertigteile von der Halteeinrichtung freigegeben und beispielsweise auf einem Fertigteilstapel abgelegt werden.

Die Aufgabe der vorliegenden Erfindung besteht darin, eine Handlingvorrichtung und ein Handlingverfahren mit gegenüber dem Stand der Technik erhöhter Leistungsfähigkeit, eine mit einer derart leistungsfähigen Handlingvorrichtung ausgestattete maschinelle Anordnung zum schneidenden Bearbeiten von Blechen sowie ein numerisches Bearbeitungsprogramm zur Realisierung des Handlingverfahrens mittels der Handlingvorrichtung bereitzustellen.

Erfindungsgemäß gelöst wird diese Aufgabe durch die maschinelle Handlingvorrichtung nach Patentanspruch 1, die maschinelle Anordnung nach Patentanspruch 12, das maschinelle Verfahren nach Patentanspruch 13 und das numerische Bearbeitungsprogramm nach Patentanspruch 15.

An der erfindungsgemäßen maschinellen Handlingvorrichtung sind wenigstens zwei Schwenkarme vorgesehen, die voneinander entkoppelt um eine gemeinsame, in der Regel vertikale Schwenkachse geschwenkt werden können. Durch Schwenkbewegungen der Schwenkarme lassen sich an diesen angeordnete Halteeinrichtungen in Übernahme-Schwenkstellungen und in Übergabe-Schwenkstellungen überführen. Bei Übernahme-Schwenkstellung können an den Halteeinrichtungen Blechteile festgelegt werden, in einer Übergabe-Schwenkstellung geben die Halteeinrichtungen die zuvor an ihnen festgelegten Blechteile frei. Insbesondere zum Festlegen von Blechteilen kann es erforderlich sein, dass die Halteeinrichtungen zusätzlich zu der Schwenkbewegung in die Übernahme-Schwenkstellung eine senkrecht zu der Richtung der Schwenkbewegung gerichtete vertikale Absenkbewegung ausführen, aufgrund derer die Halteeinrichtungen mit den betreffenden Blechteilen in Kontakt kommen. Außerdem kann die Notwendigkeit bestehen, dass die Halteeinrichtungen nach dem Fixieren der Blechteile eine vertikale Hubbewegung ausführen, ehe sie durch Schwenken der Schwenkarme von dem Ort der Übernahme der Blechteile in die Übergabe-Schwenkstellung bewegt werden können. Die Halteeinrichtungen können herkömmlicher Bauart sein. Denkbar sind insbesondere Halteeinrichtungen mit Halteorganen in Form von Saugern, Magneten, mechanischen Greifern oder mit einer Kombination der genannten Halteorganbauarten. Besonders leistungsfähig ist die Erfindung bei gleichzeitiger Schwenkbetätigung wenigstens zweier Schwenkarme und der daran vorgesehenen Halteeinrichtungen. Voneinander entkoppelt sind die Schwenkarme insofern, als der erste Schwenkarm und der zweite Schwenkarm jeweils einen eigenen Schwenkantrieb aufweisen und folglich antriebstechnisch eigenständig sind. Dessen ungeachtet sind die von dem ersten Schwenkarm einerseits und die von dem zweiten Schwenkarm andererseits ausgeführten Schwenkbewegungen in bevorzugter Ausgestaltung der Erfindung durch entsprechende Steuerung der beiderseitigen Schwenkantriebe steuerungstechnisch aufeinander abgestimmt.

Aufgrund der besonderen Leistungsfähigkeit genügt die Erfindung auch den Anforderungen, die an das Werkstückhandling an hochproduktiven Werkzeugmaschinen zum schneidenden Bearbeiten von Blechen gestellt werden. Die erfindungsgemäße Handlingvorrichtung ist in der Lage, mit dem Schneidprozess an derartigen Maschinen, beispielsweise an Maschinen mit mehreren Schneideinrichtungen und/oder an Maschinen mit hauptzeitparalleler Fertigteilabfuhr, Schritt zu halten.

Als zu handhabende Blechteile kommen insbesondere Fertigteile in Frage, die mit Hilfe der erfindungsgemäßen Handlingvorrichtung nach ihrer Erzeugung an der Werkzeugmaschine aufgenommen und anschließend in einen maschinenfernen Bereich geschwenkt und dort etwa zum Stapeln freigegeben werden. Bei den zu handhabende Blechteilen kann es sich aber auch um Rohbleche oder um Restgitter handeln, die nach der schneidenden Bearbeitung von Rohblechen vorliegen. Im Interesse einer hohen Produktivität der betreffenden Werkzeugmaschine besteht beispielsweise die Möglichkeit, gleichzeitig an der Werkzeugmaschine Fertigteile aufzunehmen und abseits der Werkzeugmaschine Fertigteile zu stapeln. Auch ist es denkbar, dass der Werkzeugmaschine zeitgleich mit dem Abtransport eines Restgitters ein zu bearbeitendes Rohblech zugeführt wird.

Alle wesentlichen Abläufe sind im Falle der Erfindung numerisch gesteuert. Zu diesem Zweck dient ein numerisches Bearbeitungsprogramm, dessen Steuerbefehle die Durchführung des erfindungsgemäßen Handlingverfahrens an der erfindungsgemäßen Handlingvorrichtung bewirken.

Besondere Ausführungsarten der in den unabhängigen Patentansprüchen beschriebenen Erfindung ergeben sich aus den abhängigen Patentansprüchen 2 bis 11 und 14.

Grundsätzlich besteht erfindungsgemäß die Möglichkeit, den Halteeinrichtungen und somit auch den Schwenkarmen räumlich voneinander getrennte Schwenkbereiche zuzuordnen. Ausweislich Patentanspruch 2 ist in bevorzugter Ausgestaltung der Erfindung aber vorgesehen, dass die Schwenkbereiche der ersten Halteeinrichtung und der zweiten Halteeinrichtung einander überlappen. Im Extremfall können die Schwenkbereiche der verschiedenen Halteeinrichtungen beziehungsweise die Schwenkbereiche der verschiedenen Schwenkarme miteinander übereinstimmen.

Insbesondere in Fällen, in denen die erste Halteeinrichtung und die zweite Halteeinrichtung zum Festlegen von Blechteilen auf ein und denselben räumlichen Bereich an der Werkzeugmaschine zugreifen und/oder in denen die erste Halteeinrichtung und die zweite Halteeinrichtung zum Freigeben von an ihnen festgelegten Blechteilen ein und denselben räumlichen Bereich abseits der Werkzeugmaschine anfahren, kann es im Interesse eines besonders leistungsfähigen Blechteilehandlings erforderlich sein, dass die Halteeinrichtungen beziehungsweise die mit diesen versehenen Schwenkarme einander bei ihren Schwenkbewegungen passieren. Vor diesem Hintergrund sind an der maschinellen Handlingvorrichtung nach Patentanspruch 3 der erste Schwenkarm und der zweite Schwenkarm längs der gemeinsamen Schwenkachse gegeneinander versetzt angeordnet. Ragt die Halteeinrichtung des obenliegenden Schwenkarms an dessen zu dem untenliegenden Schwenkarm hin weisenden Seite vor, so muss entweder der Abstand der Schwenkarme längs der gemeinsamen Schwenkachse derart bemessen sein, dass eine Kollision der Halteeinrichtung an dem obenliegenden Schwenkarm mit dem untenliegenden Schwenkarm ausgeschlossen ist, wenn die beiden Schwenkarme einander in Richtung ihrer Schwenkbewegung(en) passieren. Oder die Längen der einander passierenden Schwenkarme sind derart zu bemessen, dass sich die Halteeinrichtung an dem obenliegenden Schwenkarm bei ihren Schwenkbewegungen außerhalb des Bewegungsbereiches des untenliegenden Schwenkarms und der an diesem vorgesehenen Halteeinrichtung befindet.

Die erste Halteeinrichtung und die zweite Halteeinrichtung können erfindungsgemäß zum gleichzeitigen Handling verschiedener Blechteile genutzt werden. Zeitgleich mit einer Schwenkbewegung des einen Schwenkarms und der daran vorgesehenen Halteeinrichtung in die Übernahme-Schwenkstellung können sich der andere Schwenkarm und die andere Halteeinrichtung mit einem an der Halteeinrichtung festgelegten Blechteil in die Übergabe-Schwenkstellung bewegen.

In bevorzugter Ausgestaltung der Erfindung besteht die Möglichkeit, die erste Halteeinrichtung und die zweite Halteeinrichtung zum Handhaben ein und desselben Blechteils zu nutzen (Patentanspruch 4). Von dieser Möglichkeit wird insbesondere dann Gebrauch gemacht, wenn große oder schwere Blechteile oder Blechteile mit ungünstiger Geometrie zu handhaben sind. Vor allem in derartigen Fällen arbeiten die Halteeinrichtungen an den verschiedenen Schwenkarmen miteinander zusammen. Im Verbund übernehmen sie das zu handhabende Blechteil in der Übernahme-Schwenkstellung und gemeinschaftlich schwenken sie mit dem an ihnen festgelegten Blechteil in die Übergabe-Schwenkstellung, in der sie das Blechteil gemeinsam freigeben. Aufgrund der Möglichkeit, verschiedenartige Blechteile mit ein und denselben Halteeinrichtungen zu handhaben, kann die erfindungsgemäße Handlingvorrichtung ein großes Teilespektrum ohne Umrüsten bewältigen. Eine für das Handling ungünstige Geometrie besitzen insbesondere Blechteile, die bei der Abfuhr von dem Restblech aufgrund ihrer Form zum Verkanten oder Verhaken neigen.

Um hinsichtlich des Ortes der Übernahme und/oder der Freigabe von Blechteilen flexibel zu sein und auch im Interesse einer flexiblen Anordnung der Halteeinrichtungen und der Schwenkarme relativ zueinander sind an erfindungsgemäßen Handlingvorrichtungen verschiedene Verstellmöglichkeiten für die Halteeinrichtungen und/oder die Schwenkarme vorgesehen. Eine Verstellung einer Halteeinrichtung in Längsrichtung des zugeordneten Schwenkarms empfiehlt sich auch, um bei Schwenkbewegungen der Halteeinrichtung und gegebenenfalls eines an der Halteeinrichtung festgelegten Blechteils den Abstand der durch die Halteeinrichtung und gegebenenfalls das Blechteil verkörperten Last von der gemeinsamen Schwenkachse der Schwenkarme zu minimieren. Bei minimiertem Achsabstand der Last sind für die Erzeugung der Schwenkbewegungen des betreffenden Schwenkarms motorische Schwenkantriebe mit verhältnismäßig geringer Antriebsleistung ausreichend. Mit motorischen Schwenkantrieben höherer Antriebsleistung lassen sich besonders hohe Beschleunigungen der Halteeinrichtungen und gegebenenfalls der an diesen festgelegten Blechteile realisieren. Aus hohen Beschleunigungen der Halteeinrichtungen wiederum resultiert eine besondere Leistungsfähigkeit der erfindungsgemäßen Handlingvorrichtung.

Gemäß Patentanspruch 5 lässt sich die erste Halteeinrichtung in Längsrichtung des ersten Schwenkarms und/oder die zweite Halteeinrichtung in Längsrichtung des zweiten Schwenkarms positionieren.

Zu diesem Zweck kann die erste Halteeinrichtung relativ zu dem ersten Schwenkarm bzw. die zweite Halteeinrichtung relativ zu dem zweiten Schwenkarm jeweils in Schwenkarm-Längsrichtung zustellbar sein.

Aus entsprechenden Gründen sind im Falle der Erfindungsbauart nach Patentanspruch 6 der erste Schwenkarm gemeinschaftlich mit der ersten Halteeinrichtung und/oder der zweite Schwenkarm gemeinschaftlich mit der zweiten Halteeinrichtung jeweils in Schwenkarm-Längsrichtung gegenüber einer die Schwenkarme lagernden Tragstruktur zustellbar.

An der erfindungsgemäßen Handlingvorrichtung nach Patentanspruch 7 sind die erste Halteeinrichtung und/oder die zweite Halteeinrichtung parallel zu der gemeinsamen Schwenkachse der Schwenkarme zustellbar. Von dieser Zustellmöglichkeit wird beispielsweise dann Gebrauch gemacht, wenn ein Blechteil an der betreffenden Halteeinrichtung festzulegen ist und die Halteeinrichtung aus einer während der Schwenkbewegung in die Übernahme-Schwenkstellung eingenommenen Position parallel zu der gemeinsamen Schwenkachse zum Festlegen des Blechteils mit diesem in Kontakt gebracht werden muss oder wenn ein Blechteil nach dem Festlegen an der betreffenden Halteeinrichtung aus dem bearbeiteten Blech auszuheben ist.

Die Patentansprüche 8 und 9 beschreiben besonders vorteilhafte Möglichkeiten, die Schwenkarme der erfindungsgemäßen Handlingvorrichtung mit an diesen benötigten Medien zu versorgen. Benötigt werden Medien beispielsweise zur Realisierung von Schwenk- und Zustellbewegungen der Schwenkarme und der an den Schwenkarmen vorgesehenen Halteeinrichtungen aber auch zur Erzeugung oder zur Aufhebung von Haltekräften, aufgrund derer Blechteile an den Halteeinrichtungen festgelegt sind.

Gemäß Patentanspruch 8 verläuft wenigstens eine Versorgungsleitung für den einen Schwenkarm und/oder die an diesem vorgesehene Halteeinrichtung durch das Schwenklager des anderen Schwenkarms und folglich in oder zumindest nahe der bei Schwenkbewegungen der Schwenkarme eine "neutrale" Achse darstellenden gemeinsamen Schwenkachse des ersten Schwenkarms und des zweiten Schwenkarms.

Im Falle der Erfindungsbauart nach Patentanspruch 9 wird die Versorgungsleitung für einen motorischen Schwenkantrieb eines der Schwenkarme durch das Schwenklager des anderen Schwenkarms hindurchgeführt.

Im Falle der Erfindungsbauart nach Patentanspruch 10 befindet beziehungsweise befinden sich der schwenkarmseitige Lagerteil des ersten Schwenkarms und/oder der schwenkarmseitige Lagerteil des zweiten Schwenkarms an einem seitlichen Ansatz des betreffenden Schwenkarms. In bevorzugter Ausgestaltung der Erfindung sind der erste Schwenkarm und/oder der zweite Schwenkarm jeweils in ihrer Längsrichtung relativ zu dem zugehörigen seitlichen Ansatz zustellbar.

Gemäß den Patentansprüchen 11 und 14 können die erste Halteeinrithtung und/oder die zweite Halteeinrichtung durch entsprechende Schwenkbewegungen des ersten Schwenkarms beziehungsweise des zweiten Schwenkarms nicht nur in eine Übernahme-Schwenkstellung und in eine Übergabe-Schwenkstellung sondern darüber hinaus auch in eine Assistenz-Schwenkstellung überführt werden. Die Assistenz-Schwenkstellung der einen Halteeinrichtung ist der Übernahme-Schwenkstellung oder der Übergabe-Schwenkstellung der jeweils anderen Halteeinrichtung zugeordnet. Die in der Assistenz-Schwenkstellung befindliche Halteeinrichtung kann die andere Halteeinrichtung bei der Übernahme von zu handhabenden Blechteilen bzw. bei der Freigabe von Blechteilen unterstützen. Entnimmt etwa eine Halteeinrichtung in der Übernahme-Schwenkstellung ein Blechteil aus einem Restgitter des bearbeiteten Blechs, so kann die in die Assistenz-Schwenkstellung geschwenkte Halteeinrichtung das Restgitter fixieren, bis die in der Übernahme-Schwenkstellung befindliche Halteeinrichtung das Blechteil von dem Restgitter getrennt hat. Auf diese Art und Weise können insbesondere ein Festklemmen und/oder ein Verhaken des aus dem Restgitter zu entnehmenden Blechteils an dem Restgitter verhindert werden. Entsprechend kann die in die Assistenz-Schwenkstellung bewegte Halteeinrichtung die Freigabe eines Blechteils unterstützen, das an der in die Übergabe-Schwenkstellung überführten Halteeinrichtung festgelegt ist. Durch entsprechende Steuerung der erfindungsgemäßen Handlingvorrichtung kann einer Übernahme-Schwenkstellung und/oder einer Übergabe-Schwenkstellung einer der Halteeinrichtungen routinemäßig eine Assistenz-Schwenkstellung der anderen Halteeinrichtung zugeordnet werden. In bevorzugter Ausgestaltung der Erfindung ist dafür Sorge getragen, dass für die in der Übernahme-Schwenkstellung und/oder für die in der Übergabe-Schwenkstellung befindliche Halteeinrichtung nur bei tatsächlichem Bedarf die weitere Halteeinrichtung zur Unterstützung angefordert und in eine Assistenz-Schwenkstellung überführt wird. Die Funktionssicherheit der erfindungsgemäßen Handlingvorrichtung und des erfindungsgemäßen Verfahrens wird durch die gegenseitige Unterstützung der Halteeinrichtungen wesentlich erhöht.

Nachfolgend wird die Erfindung anhand beispielhafter schematischer Darstellungen näher erläutert. Es zeigen:
- Figur 1: eine maschinelle Anordnung für die schneidende Blechbearbeitung mit einer Werkzeugmaschine und einer Handlingvorrichtung in der Draufsicht,
- Figur 2: eine Schnittdarstellung der Handlingvorrichtung gemäß Figur 1 mit einer in Figur 1 senkrecht zu der Zeichenebene und entlang der Linie II-II verlaufenden Schnittebene,
- Figuren 3 bis 6: die Handlingvorrichtung gemäß den Figuren 1 und 2 in einem ersten Betriebsmodus,
- Figuren 7 bis 10: die Handlingvorrichtung gemäß den Figuren 1 bis 6 in einem zweiten Betriebsmodus und
- Figur 11: die Handlingvorrichtung gemäß den Figuren 1 bis 10 in einem dritten Betriebsmodus.

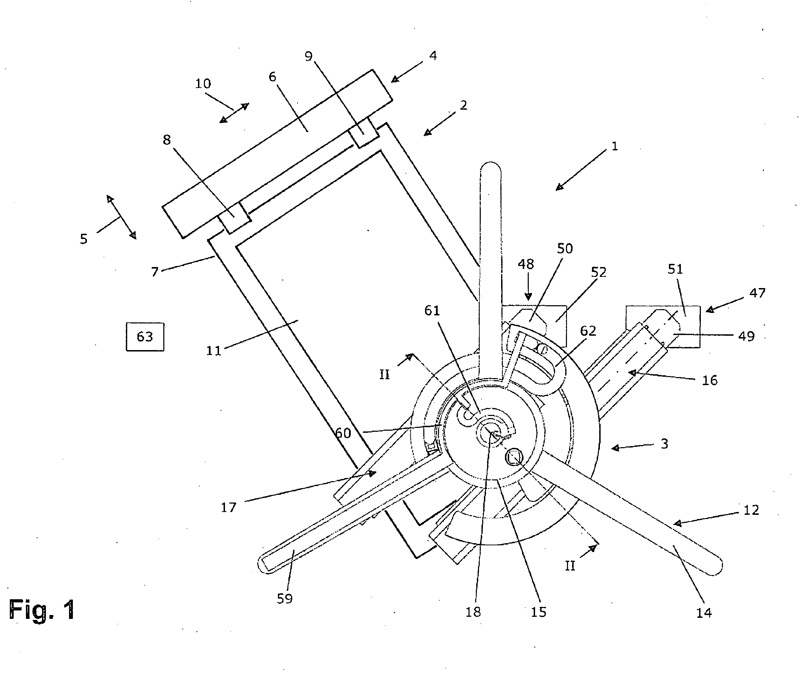

Gemäß Figur 1 umfasst eine maschinelle Anordnung 1 für die schneidende Blechbearbeitung eine Werkzeugmaschine in Form einer stark schematisch dargestellten Laserschneidmaschine 2 sowie eine maschinelle Handlingvorrichtung 3. Anstelle der Laserschneidmaschine 2 ist beispielsweise auch eine Stanzmaschine denkbar.

Bei der Laserschneidmaschine 2 handelt es sich um eine Laserflachbettmaschine üblicher Bauart. Ein Maschinenportal 4 der Laserschneidmaschine 2 ist mittels eines herkömmlichen Portalantriebs in Richtung eines Doppelpfeils 5 verfahrbar. Bei den Verfahrbewegungen überspannt das Maschinenportal 4 mit einem Portalquerträger 6 eine Werkstückauflage 7 der Laserschneidmaschine 2. Längs des Portalquerträgers 6 bewegen sich Laserschneidköpfe 8, 9 voneinander entkoppelt in Richtung eines Doppelpfeils 10. Die Laserschneidköpfe 8, 9 bilden eine Schneidvorrichtung der Laserschneidmaschine 2.

In gewohnter Weise können die Laserschneidköpfe 8, 9 aufgrund ihrer Beweglichkeit in Richtung des Doppelpfeils 10 und aufgrund der Beweglichkeit des Maschinenportals 4 in Richtung des Doppelpfeils 5 zur Bearbeitung eines auf der Werkstückauflage 7 abgelegten Bleches 11 jeden beliebigen Punkt der Werkstückauflage 7 anfahren.

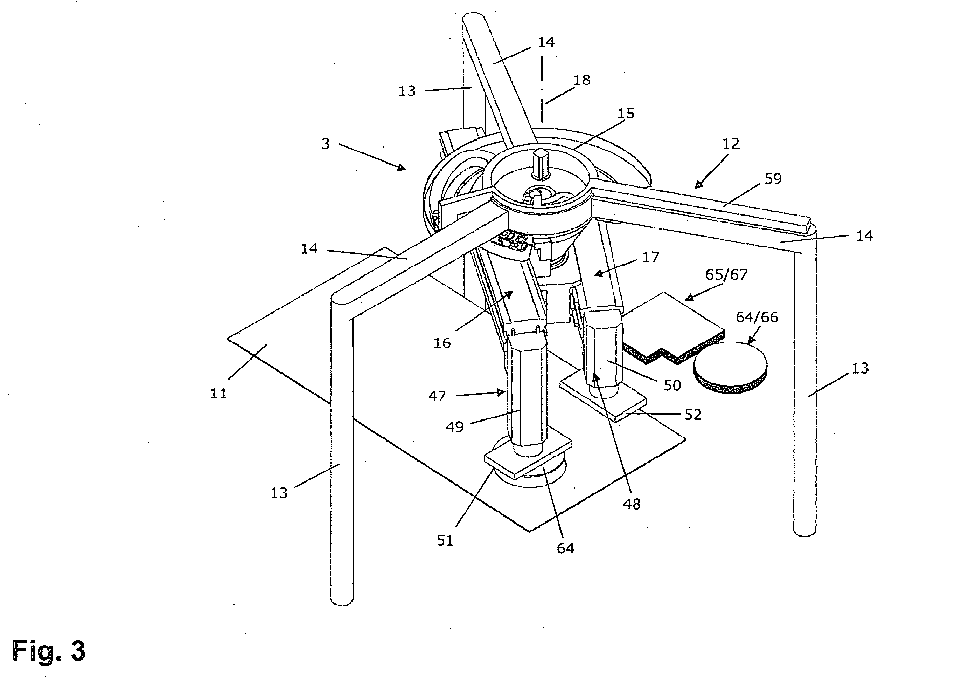

Die Handlingvorrichtung 3 der maschinellen Anordnung 1 besitzt eine tripodartige Tragstruktur 12 die sich mit vertikalen Stützen 13 (Figur 3) seitlich neben der Werkstückauflage 7 auf der Aufstellfläche der maschinellen Anordnung 1 abstützt. Ausgehend von den vertikalen Stützten 13 verlaufen horizontale Träger 14 der Tragstruktur 12 sternförmig zu einem zentralen Tragring 15 der Tragstruktur 12, mit welchem die horizontalen Träger 14 an ihren Enden starr verbunden sind. Als Alternative zu der tripodartigen Tragstruktur 12 kommt beispielsweise auch eine portalartige Tragstruktur in Frage.

An dem zentralen Tragring 15 der Tragstruktur 12 sind ein erster Schwenkarm 16 und ein zweiter Schwenkarm 17 der Handlingvorrichtung 3 um eine gemeinsame vertikale Schwenkachse 18 schwenkbar aufgehängt. In Richtung der gemeinsamen Schwenkachse 18 sind der erste Schwenkarm 16 und der zweite Schwenkarm 17 gegeneinander versetzt.

Bei der dargestellten Anordnung der Tragstruktur 12 liegt die Schwenkachse 18 des ersten Schwenkarms 16 und des zweiten Schwenkarms 17 über dem Blech 11. Eine Anordnung der Trag-struktur 12 derart, dass die Schwenkachse 18 des ersten Schwenkarms 16 und des zweiten Schwenkarms 17 seitlich neben dem Blech 11 angeordnet ist, empfiehlt sich in Fällen, in denen die Handlingvorrichtung 3 im Bereich der Schwenkachse 18 konstruktionsbedingt einen Totbereich aufweist.

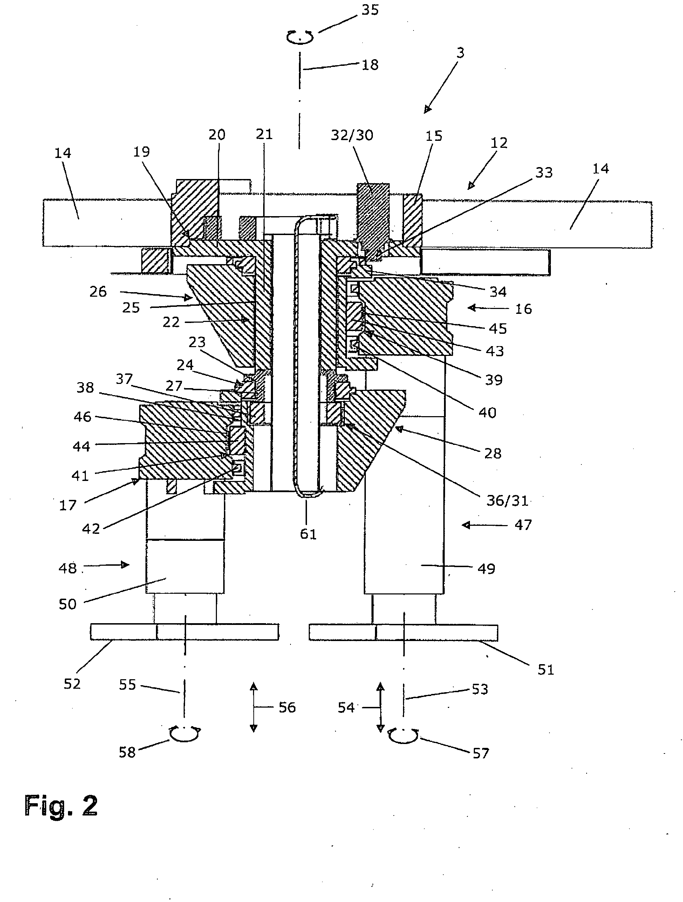

Zur Lagerung des ersten Schwenkarms 16 und des zweiten Schwenkarms 17 ist der zentrale Tragring 15 der Tragstruktur 12 ausweislich Figur 2 mit einem hutförmigen Aufhängungselement 19 versehen. An einem Flansch 20 ist das Aufhängungselement 19 fest mit dem zentralen Tragring 15 verbunden. Ein seinerseits mit dem Flansch 20 starr verbundener Hohlzylinder 21 des Aufhängungselementes 19 dient als tragstrukturseitiger Schwenklagerteil eines oberen Schwenklagers 22 für den ersten Schwenkarm 16. Eine axiale Verlängerung 23 des Hohlzylinders 21 ist als tragstrukturseitiger Schwenklagerteil eines unteren Schwenklagers 24 für den zweiten Schwenkarm 17 vorgesehen.

Dem Hohlzylinder 21 der Tragstruktur 12 ist als schwenkarmseitiger Schwenklagerteil des oberen Schwenklagers 22 ein Lagerauge 25 an einem seitlichen Lagervorsprung 26 des ersten Schwenkarms 16 zugeordnet. Entsprechend bildet ein Lagerauge 27 an einem seitlichen Lagervorsprung 28 des zweiten Schwenkarms 17 den schwenkarmseitigen Schwenklagerteil des unteren Schwenklagers 24.

Mit dem seitlichen Lagervorsprung 26 des ersten Schwenkarms 16 und dem seitliche Lagervorsprung 28 des zweiten Schwenkarms 17 sind das obere Schwenklager 22 und das untere Schwenklager 24 seitlich gegenüber dem ersten Schwenkarm 16 und dem zweiten Schenkarm 17 versetzt. Gleichzeitig sind das obere Schwenklager 22 und das untere Schwenklager 24 konzentrisch mit der gemeinsamen Schwenkachse 18 des ersten Schwenkarms 16 und des zweiten Schwenkarms 17 angeordnet.

Zur Erzeugung von Schwenkbewegungen des ersten Schwenkarms 16 und des zweiten Schwenkarms 17 um die gemeinsame Schwenkachse 18 dienen ein erster motorischer Schwenkantrieb 30 für den ersten Schwenkarm 16 und ein zweiter motorischer Schwenkantrieb 31 für den zweiten Schwenkarm 17.

Der erste motorische Schwenkantrieb 30 umfasst einen ersten elektrischen Schwenkantriebsmotor 32, der an dem Aufhängungselement 19 der Tragstruktur 12 montiert ist und der mit einem Antriebsritzel 33 in einen Zahnkranz 34 eingreift, der seinerseits mit dem seitlichen Lagervorsprung 26 des ersten Schwenkarms 16 fest verbunden ist. Durch Betätigen des ersten Schwenkantriebsmotors 32 können der seitliche Lagervorsprung 26 und der an diesem gelagerte erste Schwenkarm 16 in Richtung eines Doppelpfeils 35 um die gemeinsame Schwenkachse 18 gedreht bzw. geschwenkt werden.

Dreh- bzw. Schwenkbewegungen des seitlichen Lagervorsprungs 28 mit dem zweiten Schwenkarm 17 um die gemeinsame Schwenkachse 18 werden mittels eines zweiten elektrischen Schwenkantriebsmotors 36 des zweiten motorischen Schwenkantriebes 31 erzeugt. Der zweite Schwenkantriebsmotor 36 ist als Torque-Motor ausgeführt. Ein Stator 37 mit den Motorwicklungen des zweiten Schwenkantriebsmotors 36 ist an der axialen Verlängerung 23 des Aufhängungselementes 19 der Tragstruktur 12 befestigt. Ein zugehöriger Rotor 38 mit Permanentmagneten ist an dem seitlichen Lagervorsprung 28 des zweiten Schwenkarms 17 angebracht.

Relativ zu dem seitlichen Lagervorsprung 26 ist der nach Art eines Kragarms ausgeführte erste Schwenkarm 16 in seiner in Figur 1 strichpunktiert angedeuteten Längsrichtung verschieblich. Entsprechend ist der zweite, gleichfalls kragarmartige Schwenkarm 17 relativ zu dem seitlichen Lagervorsprung 28 längsbeweglich. Zur Erzeugung von Längsbewegungen des ersten Schwenkarms 16 relativ zu dem seitlichen Lagervorsprung 26 dient ein erster motorischer Längsantrieb 39. Mittels einer ersten Längsführung 40 ist der erste Schwenkarm 16 bei Längsbewegungen an dem seitlichen Lagervorsprung 26 geführt.

Ein zweiter motorischer Längsantrieb 41 bewirkt die Längsbewegungen des zweiten Schwenkarms 17 relativ zu dem seitlichen Lagervorsprung 28. Eine zweite Längsführung 42 führt den zweiten Schwenkarm 17 bei seinen Längsbewegungen an dem seitlichen Lagervorsprung 28.

Sowohl bei dem ersten Längsantrieb 39 als auch bei dem zweiten Längsantrieb 41 handelt es sich in dem dargestellten Beispielsfall um einen Linear-Direktantrieb. Andere Antriebsbauarten sind denkbar.

Primärteile 43, 44 des ersten Längsantriebs 39 und des zweiten Längsantriebs 41 sind an den seitlichen Lagervorsprüngen 26, 28 des ersten Schwenkarms 16 und des zweiten Schwenkarms 17 montiert. Zugehörige Sekundärteile 45, 46 des ersten Längsantriebes 39 und des zweiten Längsantriebs 41 sind an dem ersten Schwenkarm 16 und dem zweiten Schwenkarm 17 angebracht.

Jeweils an einem Längsende sind der erste Schwenkarm 16 mit einer ersten Hubeinheit 47 und der zweite Schwenkarm 17 mit einer zweiten Hubeinheit 48 versehen. Die erste Hubeinheit 47 umfasst eine erste Hubsäule 49, die zweite Hubeinheit 48 eine zweite Hubsäule 50. An der ersten Hubsäule 49 ist eine erste Halteeinrichtung in Form einer Saugerplatte 51 angebracht. Die zweite Hubsäule 50 weist als zweite Halteeinrichtung eine Saugerplatte 52 auf. An ihrer Unterseite sind die Saugerplatten 51, 52 jeweils mit einem Saugerfeld versehen, das von Halteorganen in Form von herkömmlichen Vakuumsaugern gebildet wird.

Gegenüber dem ersten Schwenkarm 16 ist die gesamte erste Hubeinheit 47 längs einer in Figur 2 angedeuteten Hubachse 53 in Richtung eines Doppelpfeils 54 heb- und senkbar. Entsprechend kann die zweite Hubeinheit 48 relativ zu dem zweiten Schwenkarm 17 längs einer Hubachse 55 in Richtung eines Doppelpfeils 56 angehoben und abgesenkt werden. Als Hubantriebe für die erste Hubeinheit 47 und die zweite Hubeinheit 48 kommen beispielsweise herkömmliche Linear-Direktantriebe oder herkömmliche Kugelgewindeantriebe in Frage. Die Antriebsmotoren der Hubantriebe sind in den ersten Schwenkarm 16 und in den zweiten Schwenkarm 17 integriert und in den Zeichnungen der Einfachheit halber nicht dargestellt.

Bei den Bewegungen längs der Hubachsen 53, 55 sind die Hubeinheiten 47, 48 an der zugeordneten Stirnseite des ersten Schwenkarms 16 und des zweiten Schwenkarms 17 geführt. Mittels eines nicht gezeigten herkömmlichen Drehantriebes kann die Saugerplatte 51 relativ zu der ersten Hubsäule 49 in Richtung eines Doppelpfeils 57 um die Hubachse 53 dreheingestellt werden. Auf entsprechende Art und Weise ist die Drehstellung der Saugerplatte 52 gegenüber der zweiten Hubsäule 50 in Richtung eines Doppelpfeils 58 um die Hubachse 55 einstellbar.

Versorgungsleitungen für Medien, die an der Handlingvorrichtung 3 benötigt werden, sind an einem der horizontalen Träger 14 der Tragstruktur 12 in einem geradlinigen Leitungskanal 59 untergebracht (Figur 1). An dem zentralen Tragring 15 der Tragstruktur 12 geht der geradlinige Leitungskanal 59 in einen gebogenen Leitungskanal 60 über. Etwa in der Mitte des gebogenen Leitungskanal 60 wird aus diesem ein Leitungsbündel herausgeführt. Das Leitungsbündel umfasst Versorgungsleitungen 61 für diejenigen Medien, die an dem zweiten Schwenkarm 17 und der an dem zweiten Schwenkarm 17 vorgesehenen zweiten Hubeinheit 48 benötigt werden, beispielsweise eine elektrische Versorgungsleitung für den zweiten Schwenkantriebsmotor 36 und eine Leitung, über welche die Vakuumsauger der Saugerplatte 52 der zweiten Hubeinheit 48 an eine Vakuumquelle angeschlossen sind.

Am Ende des gebogenen Leitungskanals 60 treten die Versorgungsleitungen für den ersten Schwenkarm 16 und die erste Hubeinheit 47 aus. Außerhalb des gebogenen Leitungskanals 60 sind die Versorgungsleitungen für den ersten Schwenkarm 16 in einer in Figur 1 stark schematisch dargestellten Schleppkette 62 untergebracht. Das von dem gebogenen Leitungskanal 60 abliegende Ende der Schleppkette 62 ist an den ersten Schwenkarm 16 angebunden. Führt der erste Schwenkarm 16 Schwenkbewegungen um die gemeinsame Schwenkachse 18 aus, so folgen die Schleppkette 62 und die darin untergebrachten Versorgungsleitungen den Schwenkarmbewegungen in gewohnter Weise.

Das Leitungsbündel mit den Versorgungsleitungen 61 für den zweiten Schwenkarm 17 und die zweite Hubeinheit 48 wird ausweislich Figur 2 durch das obere Schwenklager 22 für den ersten Schwenkarm 16 und das untere Schwenklager 24 für den zweiten Schwenkarm 17 hindurchgeführt. Dabei verläuft das Leitungsbündel in der gemeinsamen Schwenkachse 18, die bei Schwenkbewegungen des ersten Schwenkarms 16 und des zweiten Schwenkarms 17 eine neutrale Achse bildet. Demzufolge sind die Versorgungsleitungen 61 im Innern des oberen Schwenklagers 22 und des unteren Schwenklagers 24 bei Schwenkbewegungen des ersten Schwenkarms 16 und des zweiten Schwenkarms 17 allenfalls geringfügigen mechanischen Beanspruchungen unterworfen.

Die Schwenkbewegungen des ersten Schwenkarms 16 und des zweiten Schwenkarms 17 um die gemeinsame Schwenkachse 18 sind ebenso wie alle übrigen wesentlichen Funktionen der Handlingvorrichtung 3 und der Laserschneidmaschine 2 der maschinellen Anordnung 1 numerisch gesteuert. Zu diesem Zweck ist eine in Figur 1 stark schematisch dargestellte numerische Steuereinheit 63 der maschinellen Anordnung 1 vorgesehen, auf der ein für die jeweilige Bearbeitungsaufgabe erstelltes numerisches Bearbeitungsprogramm abläuft.

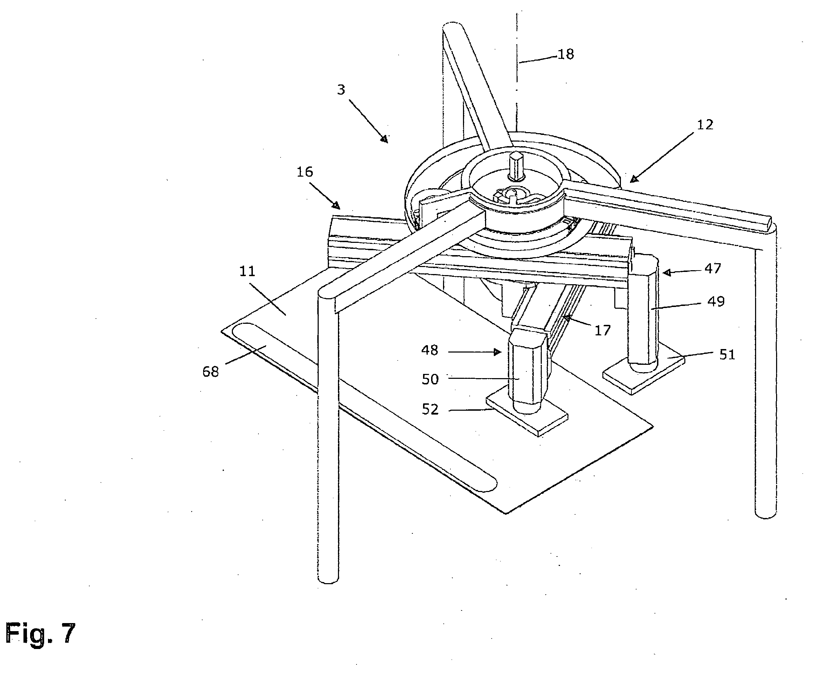

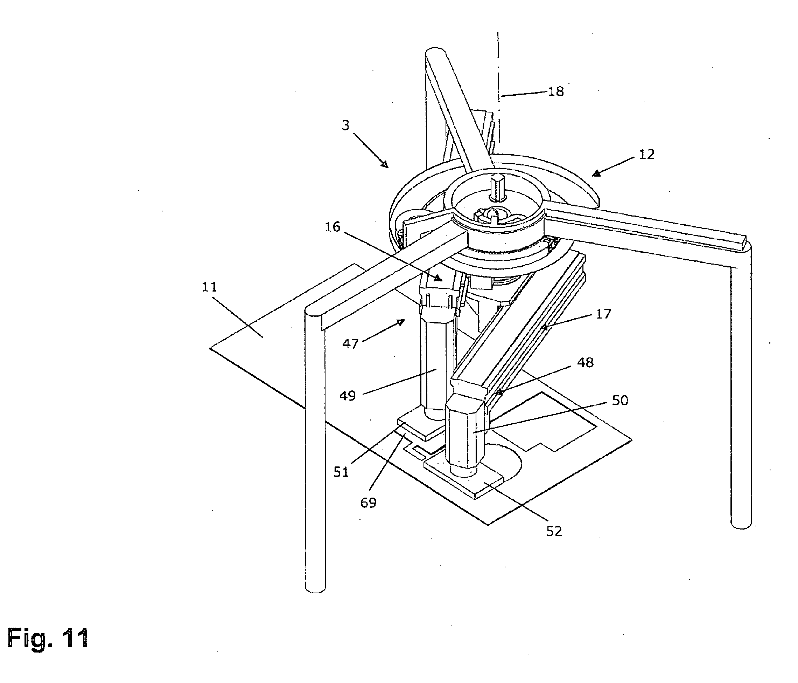

In dem dargestellten Beispielsfall sind drei programmgesteuerte Betriebsmodi der Handlingvorrichtung 3 realisierbar, nämlich der Parallelbetrieb des ersten Schwenkarms 16 und des zweiten Schwenkarms 17 (Figuren 3 bis 6), der Verbundbetrieb des ersten Schwenkarms 16 und des zweiten Schwenkarms 17 (Figuren 7 bis 10) sowie der Unterstützungsbetrieb des ersten Schwenkarms 16 und des zweiten Schwenkarms 17 (Figur 11).

Im Betriebsmodus "Parallelbetrieb" sind gemäß den Figuren 3 bis 6 der erste Schwenkarm 16 und der zweite Schwenkarm 17 gleichzeitig im Einsatz. Dabei wird an einem der Schwenkarme 16, 17 mittels der betreffenden, in eine Übernahme-Schwenkstellung überführten Saugerplatte 51, 52 ein Blechteil in Form eines aus einem Blech 11 ausgeschnittenen Fertigteils 64, 65 von der Werkstückauflage 7 der Laserschneidmaschine 2 aufgenommen. Gleichzeitig wird mittels des anderen der Schwenkarme 16, 17 ein zuvor an der Werkstückauflage 7 aufgenommenes Fertigteil 64, 65 aus dem Nahbereich der Werkstückauflage 7 abgeführt und abseits der Werkstückauflage 7 bei einer Übergabe-Schwenkstellung der betreffenden Saugerplatte 51, 52 beispielsweise an einen Fertigteilstapel 66, 67 übergeben. Die Laserschneidmaschine 2 und deren Komponenten sind in den Figuren 3 bis 6 und auch in den Figuren 7 bis 11 der besseren Übersichtlichkeit halber nicht dargestellt.

Figur 3 zeigt die im Modus "Parallelbetrieb" arbeitende Handlingvorrichtung 3 zu einem Zeitpunkt, zu welchem mittels der Saugerplatte 51 der ersten Hubeinheit 47 ein zuvor von einem der Laserschneidköpfe 8, 9 ausgeschnittenes scheibenförmiges Fertigteil 64 aus dem restlichen Blech 11 entnommen worden ist. Der erste Schwenkarm 16 befindet sich nach wie vor mit der Saugerplatte 51 in einer Übernahme-Schwenkstellung, bei welcher das Fertigteil 64 zuvor nach Absenken der ersten Hubeinheit 47 auf das Blech 11 an der Saugerplatte 51 festgelegt worden ist. Der zweite Schwenkarm 17 ist im Begriff, die Saugerplatte 52 der zweiten Hubeinheit 48 von dem Fertigteilstapel 67, auf welchem die Saugerplatte 52 zuvor in einer Übergabe-Schwenkstellung ein bei einer vorausgegangenen Blechbearbeitung erzeugtes eckiges Fertigteil 65 abgelegt hat, zurück in eine Übernahme-Schwenkstellung über dem Blech 11 zu schwenken.

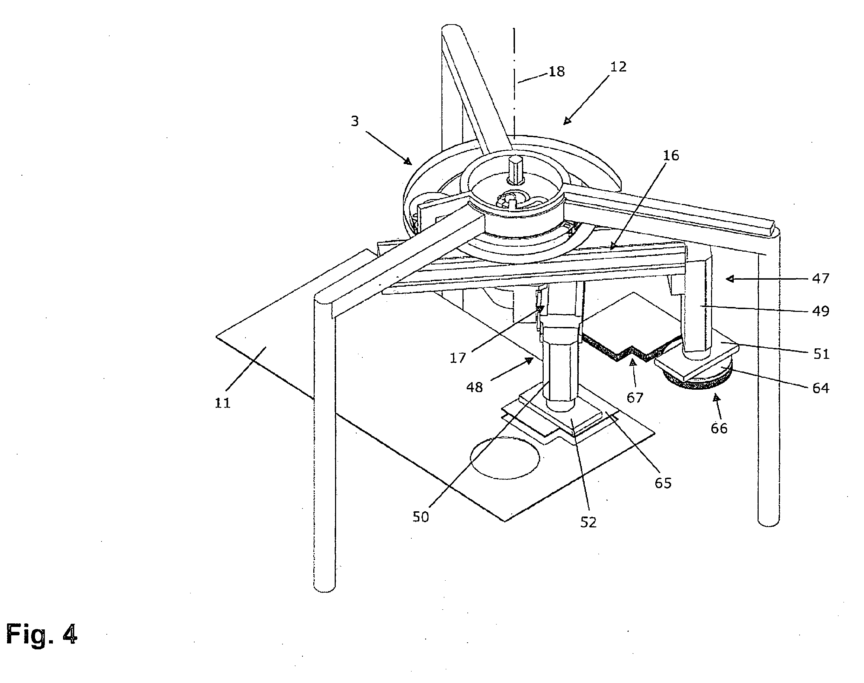

In einer Übernahme-Schwenkstellung befindet sich die Saugerplatte 52 an dem zweiten Schwenkarm 17 in Figur 4. Zuvor war bei in der Übernahme-Schwenkstellung befindlicher Saugerplatte 52 die zweite Hubeinheit 48 mit der Saugerplatte 52 aus einer angehobenen Position auf ein Fertigteil 65 abgesenkt worden, welches einer der Laserschneidköpfe 8, 9 aus dem Blech 11 ausgeschnitten hatte. Bei abgesenkter zweiter Hubeinheit 48 wurde das Fertigteil 65 an der Saugerplatte 52 in der üblichen Art und Weise durch Anlegen eines Unterdrucks an die Vakuumsauger der Saugerplatte 52 fixiert. Anschließend wurde die zweite Hubeinheit 48 gemeinsam mit der Saugerplatte 52 und dem daran festgelegten Fertigteil 65 in die aus Figur 4 ersichtliche Position angehoben.

Zeitgleich mit der Übernahme des Fertigteils 65 durch die Saugerplatte 52 der zweiten Hubeinheit 48 hat der erste Schwenkarm 16 die Saugerplatte 51 der ersten Hubeinheit 47 aus der Übernahme-Schwenkstellung gemäß Figur 3 um die gemeinsame Schwenkachse 18 in die Übergabe-Schwenkstellung gemäß Figur 4 geschwenkt. Durch Belüften der Vakuumsauger an der Saugerplatte 51 wird das an der Saugerplatte 51 zunächst noch festgelegte Fertigteil 64 freigegeben und unter Schwerkraftwirkung auf dem Fertigteilstapel 66 abgelegt.

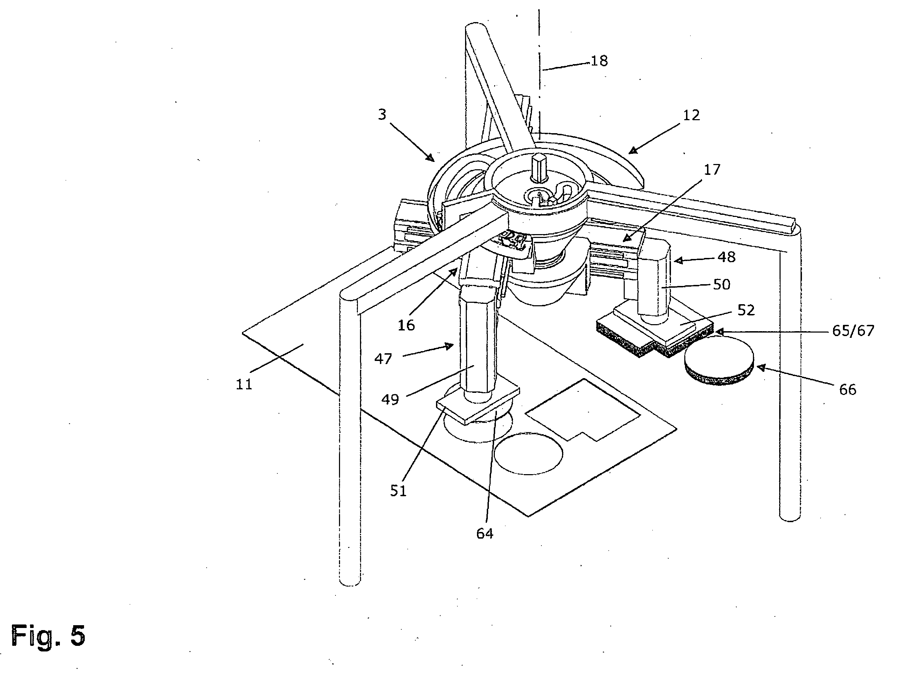

In Figur 5 befindet sich wiederum die Saugerplatte 51 an dem ersten Schwenkarm 16 in einer Übernahme-Schwenkstellung oberhalb des Bleches 11, während die Saugerplatte 52 an dem zweiten Schwenkarm 17 erneut eine Übergabe-Schwenkstellung oberhalb des Fertigteilstapels 67 einnimmt.

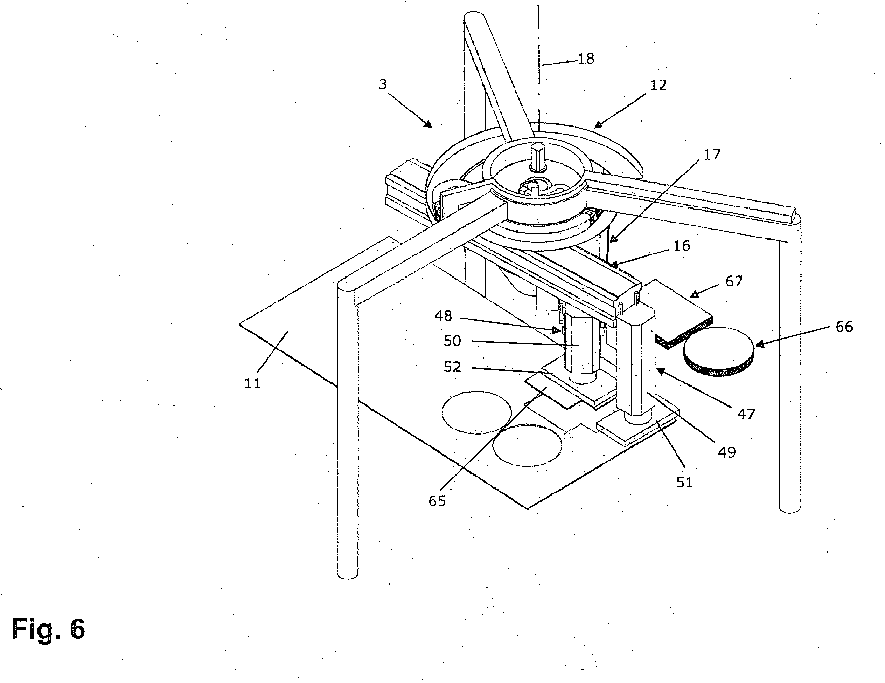

Bei ihren Schwenkbewegungen um die gemeinsame Schwenkachse 18 bewegen sich der erste Schwenkarm 16 mit der Saugerplatte 51 und der zweite Schwenkarm 17 mit der Saugerplatte 52 gleichzeitig über einander überlappende Schwenkwinkel beziehungsweise Schwenkbereiche. Dementsprechend müssen der erste Schwenkarm 16 mit der ersten Hubeinheit 47 und der zweite Schwenkarm 17 mit der zweiten Hubeinheit 48 einander bei ihren Schwenkbewegungen um die gemeinsame Schwenkachse 18 passieren. Damit es dabei nicht zu Kollisionen der an den Schwenkarmen 16, 17 vorgesehenen Hubeinheiten 47, 48 kommt, werden der erste Schwenkarm 16 mittels des ersten Längsantriebes 39 und der zweite Schwenkarm 17 mittels des zweiten Längsantriebes 41 in ihrer Längsrichtung gegenüber der gemeinsamen Schwenkachse 18 bzw. dem seitlichen Lagervorsprung 26 und dem seitlichen Lagervorsprung 28 entsprechend eingestellt. Beim gegenseitigen Passieren sind der erste Schwenkarm 16 mit der ersten Hubeinheit 47 und der zweite Schwenkarm 17 mit der zweiten Hubeinheit 48 in Figur 6 gezeigt.

Im Betriebsmodus "Verbundbetrieb" nehmen die Saugerplatte 51 an dem ersten Schwenkarm 16 und die Saugerplatte 52 an dem zweiten Schwenkarm 17 zeitgleich eine Übernahme-Schwenkstellung und eine Übergabe-Schwenkstellung ein. Auf diese Art und Weise können die Saugerplatte 51 an dem ersten Schwenkarm 16 und die Saugerplatte 52 an dem zweiten Schwenkarm 17 gemeinschaftlich dazu genutzt werden, Blechteile in Form von Fertigteilen 68, die aufgrund ihrer Größe und/oder ihres Gewichts nicht mittels einer der Saugerplatten 51, 52 alleine gehandhabt werden könnten, aus dem restlichen Blech 11 zu entnehmen und von der Werkstückauflage 7 der Laserschneidmaschine 2 abzuführen.

Figur 7 zeigt die Verhältnisse an der Handlingvorrichtung 3 zu einem Zeitpunkt, zu welchem ein Fertigteil 68 aus dem Blech 11 ausgeschnitten worden ist. Der erste Schwenkarm 16 und der zweite Schwenkarm 17 sind im Begriff, die Saugerplatten 51, 52 in eine Übernahme-Schwenkstellung zu schwenken. Die erste Hubeinheit 47 an dem ersten Schwenkarm 16 und die zweite Hubeinheit 48 an dem zweiten Schwenkarm 17 sind dabei in vertikaler Richtung gegenüber dem Blech 11 angehoben.

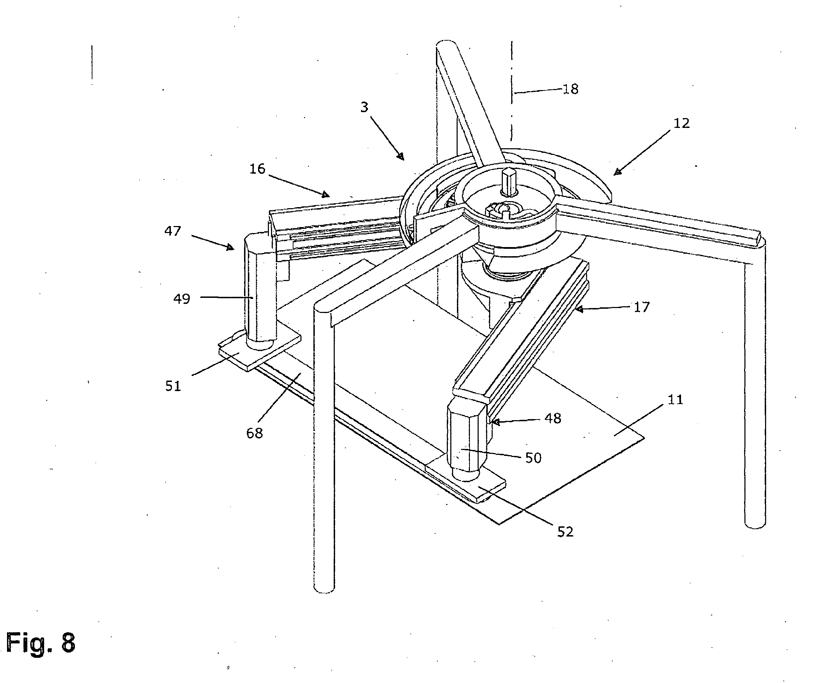

In Figur 8 nehmen beide Saugerplatten 51, 52 eine Übernahme-Schwenkstellung ein. Die erste Hubeinheit 47 ist mit der Saugerplatte 51, die zweite Hubeinheit 48 mit der Saugerplatte 52 auf das Fertigteil 68 abgesenkt. Durch Anlegen eines Unterdruckes an die Vakuumsauger der Saugerplatten 51, 52 wurde das Fertigteil 68 an den Saugerplatten 51, 52 festgelegt.

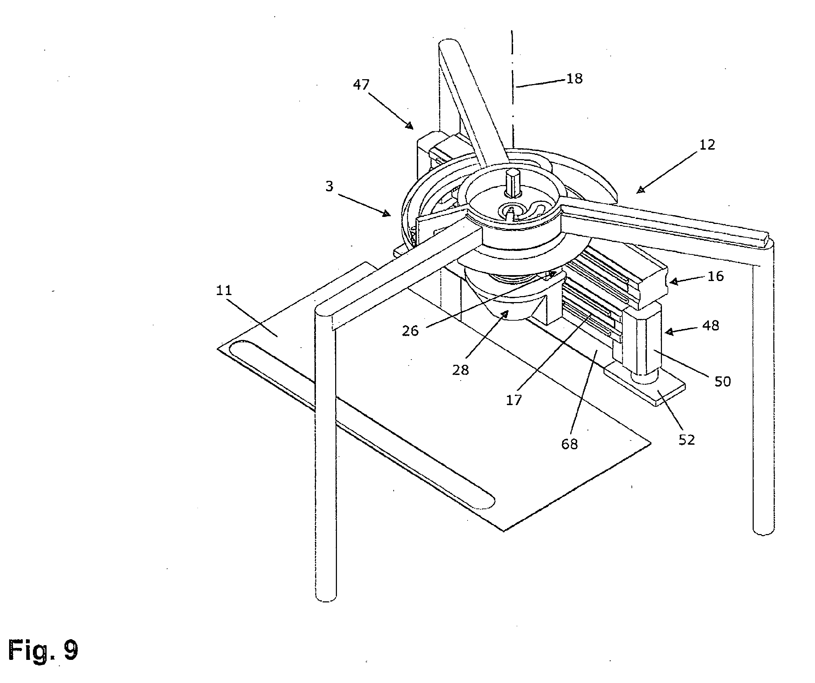

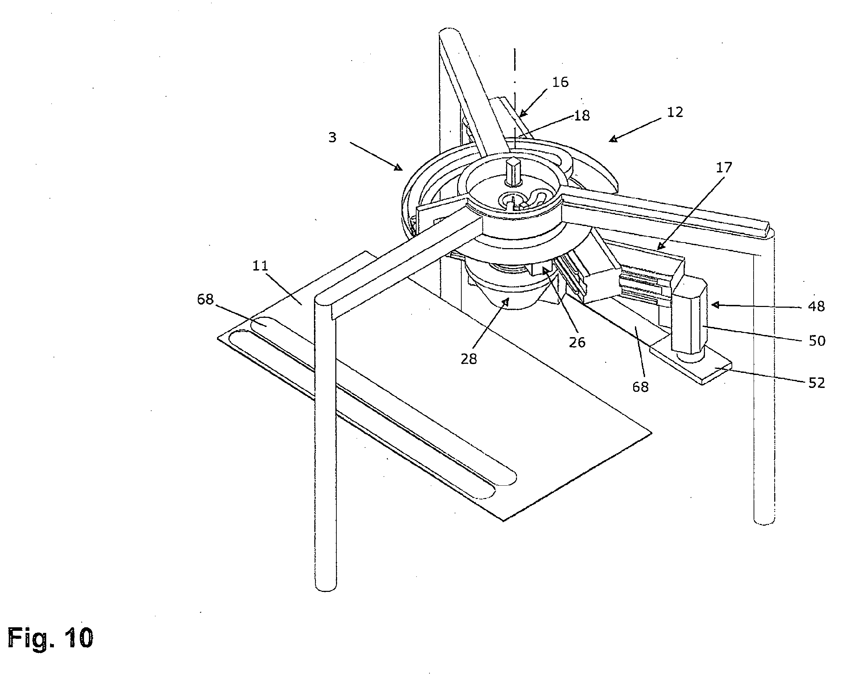

Ausgehend von diesem Funktionszustand werden die erste Hubeinheit 47 mit der Saugerplatte 51 und die zweite Hubeinheit 48 mit der Saugerplatte 52 gemeinschaftlich angehoben. Dadurch wird das an den Saugerplatten 51, 52 festgelegte Fertigteil 68 aus dem restlichen Blech 11 entnommen. Anschließend werden der erste Schwenkarm 16 und der zweite Schwenkarm 17 um die gemeinsame Schwenkachse 18 geschwenkt. Zeitgleich mit der Schwenkbewegung werden der erste Schwenkarm 16 relativ zu dem seitlichen Lagervorsprung 26 und der zweite Schwenkarm 17 relativ zu dem seitlichen Lagervorsprung 28 in Längsrichtung zugestellt. Die mit dem Fertigteil 68 lösbar verbundenen Saugerplatten 51, 52 müssen bei der Schwenkbewegung und der gleichzeitig damit ausgeführten translatorischen Bewegung des ersten Schwenkarms 16 und des zweiten Schwenkarms 17 nicht zwingend aktiv um ihre Hubachsen 53, 55 gedreht werden. Es reicht vielmehr aus, wenn die Saugerplatten 51, 52 für Drehbewegungen um die Hubachsen 53, 55 freigegeben sind. In dem letztgenannten Fall richten sich die Saugerplatten 51, 52 aufgrund der Schwenkarmbewegungen selbsttätig um die Hubachsen 53, 55 aus. In jedem Fall bewegen sich die Saugerplatte 51 der ersten Hubeinheit 47 und die Saugerplatte 52 der zweiten Hubeinheit 48 gemeinsam mit dem daran fixierten Fertigteil 68 längs geradliniger Bahnen in die Übergabe-Schwenkstellungen gemäß Figur 10. Dabei Durchlaufen der erste Schwenkarm 16 mit der ersten Hubeinheit 47 und der zweite Schwenkarm 17 mit der zweiten Hubeinheit 48 die in Figur 9 gezeigte Zwischenstellung.

Haben der erste Schwenkarm 16 mit der Saugerplatte 51 der ersten Hubeinheit 47 und der zweite Schwenkarm 17 mit der Saugerplatte 52 der zweiten Hubeinheit 48 die Übergabe-Schwenkstellungen gemäß Figur 10 erreicht, so werden die Vakuumsauger an der Saugerplatte 51 und die Vakuumsauger an der Saugerplatte 52 belüftet und das zuvor an den Hubeinheiten 47, 48 festgelegte Fertigteil 68 wird freigegeben.

Noch während des Abtransports des ersten Fertigteils 68 von der Werkstückauflage 7 der Laserschneidmaschine 2, wird mittels der Laserschneidmaschine 2 ein weiteres Fertigteil 68 aus dem Blech 11 ausgeschnitten. Auch das zweite Fertigteil 68 wird von der Saugerplatte 51 an dem ersten Schwenkarm 16 und von der Saugerplatte 52 an dem zweiten Schwenkarm 17 gemeinschaftlich aus dem restlichen Blech 11 entnommen. Anschließend wird das zweite Fertigteil 68 in der vorstehend beschriebenen Art und Weise auf dem abseits der Werkstückauflage 7 abgelegten ersten Fertigteil 68 gestapelt.

Im Modus "Unterstützungsbetrieb" wird die Handlingvorrichtung 3 vor allem in Fällen betrieben, in denen die Gefahr besteht, dass ein aus dem Blech 11 ausgeschnittenes Fertigteil 69 sich aufgrund seiner komplexen Geometrie bei der Abnahme von der Werkstückauflage 7 mit dem restlichen Blech 11 verhakt.

In dem Beispielsfall gemäß Figur 11 befindet sich die Saugerplatte 51 an dem ersten Schwenkarm 16 in der Übernahme-Schwenkstellung. Noch ist die erste Hubeinheit 47 mit der Saugerplatte 51 oberhalb des aus dem restlichen Blech 11 zu entnehmenden Fertigteils 69 angeordnet. Gleichzeitig nimmt die Saugerplatte 52 an dem zweiten Schwenkarm 17 eine Assistenz-Schwenkstellung ein. Bei Assistenz-Schwenkstellung der Saugerplatte 52 ist die zweite Hubeinheit 48 mit der Saugerplatte 52 auf das restliche Blech 11 abgesenkt.

Ausgehend von diesen Verhältnissen wird die erste Hubeinheit 47 an dem ersten Schwenkarm 16 mit der Saugerplatte 51 auf das noch im Innern des restlichen Bleches 11 angeordnete Fertigteil 69 abgesenkt. Anschließend wird das Fertigteil 69 durch Anlegen eines Unterdrucks an die Vakuumsauger der Saugerplatte 51 an dieser festgelegt. Wird nun die erste Hubeinheit 47 mit dem an der Saugerplatte 51 festgelegten Fertigteil 69 angehoben, so fungiert die auf das restliche Blech 11 abgesenkte Saugerplatte 52 der zweiten Hubeinheit 48 als Niederhalter. Dementsprechend sorgt die Saugerplatte 52 dafür, dass das restliche Blech 11 der mittels der ersten Hubeinheit 47 ausgeführten Entnahmebewegung des Fertigteils 69 nicht folgen kann. Dadurch wird eine störungsfreie Entnahme des Fertigteils 69 aus dem restlichen Blech 11 sichergestellt.

## Patentansprüche

1. Maschinelle Handlingvorrichtung zum Handhaben von Blechteilen (64, 65, 68, 69) an einer Werkzeugmaschine (2) zum schneidenden Bearbeiten von Blechen (11), mit einem Schwenkarm (16), der eine Schwenkachse aufweist, senkrecht zu welcher sich der Schwenkarm (16) mit seiner Längsrichtung erstreckt und der mit einer Halteeinrichtung versehen ist, welche durch eine Schwenkbewegung des Schwenkarms (16) um die Schwenkachse in eine Übernahme-Schwenkstellung und in eine Übergabe-Schwenkstellung schwenkbar ist, wobei an der Halteeinrichtung bei Übernahme-Schwenkstellung ein Blechteil (64, 65, 68, 69) festlegbar ist und wobei von der Halteeinrichtung bei Übergabe-Schwenkstellung ein an der Halteeinrichtung festgelegtes Blechteil (64, 65, 68, 69) freigebbar ist,
**dadurch gekennzeichnet,**
**dass** zusätzlich zu dem als erster Schwenkarm (16) vorgesehenen Schwenkarm wenigstens ein zweiter Schwenkarm (17) vorgesehen ist,
**dass** die Schwenkachse eine gemeinsame Schwenkachse (18) des ersten Schwenkarms (16) und des zweiten Schwenkarms (17) bildet, wobei der zweite Schwenkarm (17) sich mit seiner Längsrichtung senkrecht zu der gemeinsamen Schwenkachse (18) erstreckt und wobei der erste Schwenkarm (16) und der zweite Schwenkarm (17) voneinander entkoppelt um die gemeinsame Schwenkachse (18) schwenkbar sind,
**dass** zusätzlich zu der als erste Halteeinrichtung (51) an dem ersten Schwenkarm (16) vorgesehenen Halteeinrichtung eine zweite Halteeinrichtung (52) an dem zweiten Schwenkarm (17) vorgesehen ist und
**dass** die zweite Halteeinrichtung (52) durch eine Schwenkbewegung des zweiten Schwenkarms (17) um die gemeinsame Schwenkachse (18) in eine Übernahme-Schwenkstellung und in eine Übergabe-Schwenkstellung schwenkbar ist, wobei an der zweiten Halteeinrichtung (52) bei Übernahme-Schwenkstellung ein Blechteil (64, 65, 68, 69) festlegbar ist und wobei von der zweiten Halteeinrichtung (52) bei Übergabe-Schwenkstellung ein an der zweiten Halteeinrichtung (52) festgelegtes Blechteil (64, 65, 68, 69) freigebbar ist.

2. Maschinelle Handlingvorrichtung nach Anspruch 1, **dadurch gekennzeichnet, dass** die erste Halteeinrichtung (51) und die zweite Halteeinrichtung (52) jeweils innerhalb eines Schwenkwinkels um die gemeinsame Schwenkachse (18) in eine Übernahme-Schwenkstellung und in eine Übergabe-Schwenkstellung schwenkbar sind und dass der Schwenkwinkel der ersten Halteeinrichtung (51) und der Schwenkwinkel der zweiten Halteeinrichtung (52) einander überlappen.

3. Maschinelle Handlingvorrichtung nach einem der vorhergehenden Ansprüche, **dadurch gekennzeichnet, dass** der erste Schwenkarm (16) und der zweite Schwenkarm (17) längs der gemeinsamen Schwenkachse (18) gegeneinander versetzt angeordnet sind und dass der erste Schwenkarm (16) und der zweite Schwenkarm (17) bei Schwenkbewegungen zum Schwenken der ersten Halteeinrichtung (51) und/oder der zweiten Halteeinrichtung (52) in eine Übernahme-Schwenkstellung oder in eine Übergabe-Schwenkstellung voneinander passierbar sind.

4. Maschinelle Handlingvorrichtung nach einem der vorhergehenden Ansprüche, **dadurch gekennzeichnet, dass** die erste Halteeinrichtung (51) und die zweite Halteeinrichtung (52) durch Schwenkbewegungen des ersten Schwenkarms (16) und des zweiten Schwenkarms (17) in Übernahme-Schwenkstellungen schwenkbar sind, bei welchen an der ersten Halteeinrichtung (51) und an der zweiten Halteeinrichtung (52) ein und dasselbe Blechteil (68) festlegbar ist.

5. Maschinelle Handlingvorrichtung nach einem der vorhergehenden Ansprüche, **dadurch gekennzeichnet, dass** die erste Halteeinrichtung (51) in Längsrichtung des ersten Schwenkarms (16) und/oder die zweite Halteeinrichtung (52) in Längsrichtung des zweiten Schwenkarms (17) positionierbar ist.

6. Maschinelle Handlingvorrichtung nach Anspruch 5, **dadurch gekennzeichnet, dass** die maschinelle Handlingvorrichtung eine Tragstruktur (12) aufweist, an welcher der erste Schwenkarm (16) und der zweite Schwenkarm (17) um die gemeinsame Schwenkachse (18) schwenkbar gelagert sind und dass die erste Halteeinrichtung (51) in Längsrichtung des ersten Schwenkarms (16) positionierbar ist, indem der erste Schwenkarm (16) gemeinschaftlich mit der ersten Halteeinrichtung (51) in seiner Längsrichtung relativ zu der Tragstruktur (12) zustellbar ist und/oder dass die zweite Halteeinrichtung (52) in Längsrichtung des zweiten Schwenkarms (17) positionierbar ist, indem der zweite Schwenkarm (17) gemeinschaftlich mit der zweiten Halteeinrichtung (52) in seiner Längsrichtung relativ zu der Tragstruktur (12) zustellbar ist.

7. Maschinelle Handlingvorrichtung nach einem der vorhergehenden Ansprüche, **dadurch gekennzeichnet, dass** parallel zu der gemeinsamen Schwenkachse (18) die erste Halteeinrichtung (51) relativ zu dem ersten Schwenkarm (16) und/oder die zweite Halteeinrichtung (52) relativ zu dem zweiten Schwenkarm (17) zustellbar ist beziehungsweise sind.

8. Maschinelle Handlingvorrichtung nach einem der vorhergehenden Ansprüche, **dadurch gekennzeichnet, dass** die maschinelle Handlingvorrichtung eine Tragstruktur (12) aufweist, an welcher der erste Schwenkarm (16) und der zweite Schwenkarm (17) jeweils mittels eines Schwenklagers (22, 24) um die gemeinsame Schwenkachse (18) schwenkbar gelagert sind, wobei der erste Schwenkarm (16) und der zweite Schwenkarm (17) jeweils einschließlich des zugehörigen Schwenklagers (22, 24) längs der gemeinsamen Schwenkachse (18) gegeneinander versetzt angeordnet sind und wobei wenigstens eine Versorgungsleitung (61) für den einen Schwenkarm (17) und/oder die an diesem vorgesehene Halteeinrichtung (52) durch das Schwenklager (22) des anderen Schwenkarms (16) hindurchgeführt ist.

9. Maschinelle Handlingvorrichtung nach Anspruch 8, **dadurch gekennzeichnet, dass** der erste Schwenkarm (16) und der zweite Schwenkarm (17) jeweils mittels eines motorischen Schwenkantriebes (30, 31) mit Schwenkbewegungen um die gemeinsame Schwenkachse (18) antreibbar sind, und dass als Versorgungsleitung (61) für den einen Schwenkarm (17) eine Versorgungsleitung für den Schwenkantrieb (31) des einen Schwenkarms (17) durch das Schwenklager (22) des anderen Schwenkarms (16) hindurchgeführt ist.

10. Maschinelle Handlingvorrichtung nach Anspruch 8 oder Anspruch 9, **dadurch gekennzeichnet, dass** das Schwenklager (22) des ersten Schwenkarms (16) und/oder das Schwenklager (24) des zweiten Schwenkarms (17) einen tragstrukturseitigen Schwenklagerteil (21, 23) sowie einen schwenkarmseitigen Schwenklagerteil (25, 27) umfasst, wobei der schwenkarmseitige Schwenklagerteil (25, 27) an einem seitlichen Lagervorsprung (26, 28) des ersten Schwenkarms (16) oder des zweiten Schwenkarms (17) vorgesehen ist.

11. Maschinelle Handlingvorrichtung nach einem der vorhergehenden Ansprüche, **dadurch gekennzeichnet, dass** die erste Halteeinrichtung (51) durch eine Schwenkbewegung des ersten Schwenkarms (16) und/oder die zweite Halteeinrichtung (52) durch eine Schwenkbewegung des zweiten Schwenkarms (17) um die gemeinsame Schwenkachse (18) in eine Assistenz-Schwenkstellung schwenkbar ist, bei welcher gleichzeitig die jeweils andere Halteeinrichtung (51, 52) durch eine Schwenkbewegung des zugeordneten Schwenkarms (16, 17) in eine Übernahme-Schwenkstellung oder in eine Übergabe-Schwenkstellung geschwenkt ist und dass mittels der in die Assistenz-Schwenkstellung geschwenkten Halteeinrichtung (51, 52) das Festlegen eines Blechteils (64, 65, 68, 69) an der gleichzeitig in die Übernahme-Schwenkstellung geschwenkten Halteeinrichtung (51, 52) oder das Freigeben eines Blechteils (64, 65, 68, 69) von der gleichzeitig in die Übergabe-Schwenkstellung geschwenkten Halteeinrichtung (51, 52) unterstützbar ist.

12. Maschinelle Anordnung zum schneidenden Bearbeiten von Blechen (11),
• mit einer Werkzeugmaschine (2), die eine Schneidvorrichtung (8, 9) aufweist, mittels derer aus Blechteilen in Form von Rohblechen durch schneidende Bearbeitung Blechteile (64, 65, 68, 69) in Form von Bearbeitungsprodukten erstellbar sind sowie
• mit einer maschinellen Handlingvorrichtung (3), mittels derer Blechteile (64, 65, 68, 69) von der Werkzeugmaschine (2) abführbar und/oder der Werkzeugmaschine (2) zuführbar sind,
**dadurch gekennzeichnet, dass**
die maschinelle Handlingvorichtung (3) nach einem der Ansprüche 1 bis 11 ausgebildet ist.

13. Maschinelles Verfahren zum Handhaben von Blechteilen (64, 65, 68, 69) an einer Werkzeugmaschine (2) zum schneidenden Bearbeiten von Blechen (11), durchgeführt mittels einer maschinellen Handlingvorrichtung (3) nach einem der Ansprüche 1 bis 11, **dadurch gekennzeichnet, dass** die erste Halteeinrichtung (51) und die zweite Halteeinrichtung (52) durch voneinander entkoppelte Schwenkbewegungen des ersten Schwenkarms (16) und des zweiten Schwenkarms (17) um die gemeinsame Schwenkachse (18) in eine Übernahme-Schwenkstellung oder in eine Übergabe-Schwenkstellung geschwenkt werden, dass bei Übernahme-Schwenkstellung der ersten Halteeinrichtung (51) ein Blechteil (64, 65, 68, 69) an der ersten Halteeinrichtung (51) und bei Übernahme-Schwenkstellung der zweiten Halteeinrichtung (52) ein Blechteil (64, 65, 68, 69) an der zweiten Halteeinrichtung (52) festgelegt wird und dass bei Übergabe-Schwenkstellung der ersten Halteeinrichtung (51) ein an der ersten Halteeinrichtung (51) festgelegtes Blechteil (64, 65, 68, 69) und bei Übergabe-Schwenkstellung der zweiten Halteeinrichtung (52) ein an der zweiten Halteeinrichtung (52) festgelegtes Blechteil (64, 65, 68, 69) freigegeben wird.

14. Maschinelles Verfahren nach Anspruch 13, **dadurch gekennzeichnet, dass** die erste Halteeinrichtung (51) durch eine Schwenkbewegung des ersten Schwenkarms (16) und/oder die zweite Halteeinrichtung (52) durch eine Schwenkbewegung des zweiten Schwenkarms (17) um die gemeinsame Schwenkachse (18) in eine Assistenz-Schwenkstellung geschwenkt wird beziehungsweise werden, bei welcher gleichzeitig die jeweils andere Halteeinrichtung (51, 52) durch eine Schwenkbewegung des zugeordneten Schwenkarms (16, 17) in eine Übernahme-Schwenkstellung oder in eine Übergabe-Schwenkstellung geschwenkt ist und dass die in die Assistenz-Schwenkstellung geschwenkte Halteeinrichtung (51, 52) das Festlegen eines Blechteils (64, 65, 68, 69) an der gleichzeitig in die Übernahme-Schwenkstellung geschwenkten Halteeinrichtung (51, 52) oder das Freigeben eines Blechteils (64, 65, 68, 69) von der gleichzeitig in die Übergabe-Schwenkstellung geschwenkten Halteeinrichtung (51, 52) unterstützt.

15. Bearbeitungsprogramm zum Betreiben einer maschinellen Handlingvorrichtung (3) nach einem der Ansprüche 1 bis 11, **dadurch gekennzeichnet, dass** Steuerbefehle vorgesehen sind, welche bewirken, dass ein Verfahren nach Anspruch 13 oder Anspruch 14 durchgeführt wird, wenn das Bearbeitungsprogramm auf einer numerischen Steuereinheit (63) der maschinellen Handlingvorrichtung (3) abläuft.

## Claims

1. Mechanical handling device for handing sheet metal components (64, 65, 68, 69) on a machine tool (2) for the cutting processing of metal sheets (11), having a pivot arm (16) which has a pivot axis, perpendicularly to which the pivot arm (16) extends with the longitudinal direction thereof, and which is provided with a retention device, which can be pivoted by means of a pivot movement of the pivot arm (16) about the pivot axis into a receiving pivot position and into a transfer pivot position, a sheet metal component (64, 65, 68, 69) being able to be secured to the retention device in the receiving pivot position and a sheet metal component (64, 65, 68, 69) which is secured to the retention device being able to be released from the retention device in the transfer pivot position,
**characterised in that**,
in addition to the pivot arm which is provided as a first pivot arm (16), at least a second pivot arm (17) is provided, **in that** the pivot axis forms a common pivot axis (18) of the first pivot arm (16) and the second pivot arm (17), the second pivot arm (17) extending with the longitudinal direction thereof perpendicularly to the common pivot axis (18) and the first pivot arm (16) and the second pivot arm (17) being able to be pivoted about the common pivot axis (18) in a state decoupled from each other,
**in that**, in addition to the retention device which is provided as a first retention device (51) on the first pivot arm (16), a second retention device (52) is provided on the second pivot arm (17) and
**in that** the second retention device (52) can be pivoted by means of a pivot movement of the second pivot arm (17) about the common pivot axis (18) into a receiving pivot position and into a transfer pivot position, a sheet metal component (64, 65, 68, 69) being able to be secured to the second retention device (52) in the receiving pivot position and a sheet metal component (64, 65, 68, 69) which is secured to the second retention device (52) being able to be released from the second retention device (52) in the transfer pivot position.

2. Mechanical handling device according to claim 1, **characterised in that** the first retention device (51) and the second retention device (52) can each be pivoted within a pivot angle about the common pivot axis (18) into a receiving pivot position and into a transfer pivot position and **in that** the pivot angle of the first retention device (51) and the pivot angle of the second retention device (52) overlap each other.

3. Mechanical handling device according to either of the preceding claims, **characterised in that** the first pivot arm (16) and the second pivot arm (17) are arranged offset with respect to each other along the common pivot axis (18) and **in that** the first pivot arm (16) and the second pivot arm (17) can be passed by each other during pivot movements for pivoting the first retention device (51) and/or the second retention device (52) into a receiving pivot position or into a transfer pivot position.

4. Mechanical handling device according to any one of the preceding claims, **characterised in that** the first retention device (51) and the second retention device (52) can be pivoted by means of pivot movements of the first pivot arm (16) and the second pivot arm (17) into receiving pivot positions, in which one and the same sheet metal component (68) can be secured to the first retention device (51) and the second retention device (52).

5. Mechanical handling device according to any one of the preceding claims, **characterised in that** the first retention device (51) can be positioned in the longitudinal direction of the first pivot arm (16) and/or the second retention device (52) can be positioned in the longitudinal direction of the second pivot arm (17).

6. Mechanical handling device according to claim 5, **characterised in that** the mechanical handling device has a carrier structure (12), on which the first pivot arm (16) and the second pivot arm (17) are pivotably supported about the common pivot axis (18) and **in that** the first retention device (51) can be positioned in the longitudinal direction of the first pivot arm (16) by the first pivot arm (16) being able to be positioned together with the first retention device (51) in the longitudinal direction thereof relative to the carrier structure (12), and/or **in that** the second retention device (52) can be positioned in the longitudinal direction of the second pivot arm (17) by the second pivot arm (17) being able to be positioned together with the second retention device (52) in the longitudinal direction thereof relative to the carrier structure (12).

7. Mechanical handling device according to any one of the preceding claims, **characterised in that**, in a manner parallel with the common pivot axis (18), the first retention device (51) can be positioned relative to the first pivot arm (16) and/or the second retention device (52) can be positioned relative to the second pivot arm (17).

8. Mechanical handling device according to any one of the preceding claims, **characterised in that** the mechanical handling device has a carrier structure (12) on which the first pivot arm (16) and the second pivot arm (17) are each pivotably supported by means of a pivot bearing (22, 24) about the common pivot axis (18), the first pivot arm (16) and the second pivot arm (17) each being arranged offset with respect to each other including the associated pivot bearing (22, 24) along the common pivot axis (18) and at least one supply line (61) for one pivot arm (17) and/or the retention device (52) which is provided thereon being guided through the pivot bearing (22) of the other pivot arm (16).

9. Mechanical handling device according to claim 8, **characterised in that** the first pivot arm (16) and the second pivot arm (17) can each be driven by means of a motorised pivot drive (30, 31) with pivot movements about the common pivot axis (18), and **in that** as a supply line (61) for the one pivot arm (17) a supply line for the pivot drive (31) of the one pivot arm (17) is guided through the pivot bearing (22) of the other pivot arm (16).

10. Mechanical handling device according to claim 8 or claim 9, **characterised in that** the pivot bearing (22) of the first pivot arm (16) and/or the pivot bearing (24) of the second pivot arm (17) comprises a carrier-structure-side pivot bearing portion (21, 23) and a pivot-arm-side pivot bearing portion (25, 27), the pivot-arm-side pivot bearing portion (25, 27) being provided on a lateral bearing projection (26, 28) of the first pivot arm (16) or the second pivot arm (17).

11. Mechanical handling device according to any one of the preceding claims, **characterised in that** the first retention device (51) can be pivoted by means of a pivot movement of the first pivot arm (16) and/or the second retention device (52) can be pivoted by means of a pivot movement of the second pivot arm (17) about the common pivot axis (18) into an assistance pivot position, in which at the same time the other retention device (51, 52) in each case is pivoted by means of a pivot movement of the associated pivot arm (16, 17) into a receiving pivot position or into a transfer pivot position, and **in that**, by means of the retention device (51, 52) which has been pivoted into the assistance pivot position, the securing of a sheet metal component (64, 65, 68, 69) to the retention device (51, 52) which has been pivoted at the same time into the receiving pivot position or the release of a sheet metal component (64, 65, 68, 69) from the retention device (51, 52) which has been pivoted at the same time into the transfer pivot position can be supported.

12. Mechanical arrangement for the cutting processing of metal sheets (11),
• having a machine tool (2) which has a cutting device (8, 9), by means of which sheet metal components (64, 65, 68, 69) in the form of processing products can be produced from sheet metal components in the form of sheet metal blanks by means of cutting processing, and
• having a mechanical handling device (3) by means of which sheet metal components (64, 65, 68, 69) can be removed from the machine tool (2) and/or supplied to the machine tool (2),
**characterised in that**
• the mechanical handling device (3) is constructed in accordance with one of claims 1 to 11.

13. Mechanical method for handling sheet metal components (64, 65, 68, 69) on a machine tool (2) for the cutting processing of metal sheets (11), carried out by means of a mechanical handling device (3) according to any one of claims 1 to 11, **characterised in that** the first retention device (51) and the second retention device (52) are pivoted by means of mutually decoupled pivot movements of the first pivot arm (16) and the second pivot arm (17) about the common pivot axis (18) into a receiving pivot position or into a transfer pivot position, **in that**, in the receiving pivot position of the first retention device (51), a sheet metal component (64, 65, 68, 69) is secured to the first retention device (51) and, in the receiving pivot position of the second retention device (52), a sheet metal component (64, 65, 68 69) is secured to the second retention device (52), and **in that**, in the transfer pivot position of the first retention device (51), a sheet metal component (64, 65, 68, 69) which is secured to the first retention device (51) is released and, in the transfer pivot position of the second retention device (52), a sheet metal component (64, 65, 68, 69) which is secured to the second retention device (52) is released.

14. Mechanical method according to claim 13, **characterised in that** the first retention device (51) is pivoted by means of a pivot movement of the first pivot arm (16) and/or the second retention device (52) is pivoted by means of a pivot movement of the second pivot arm (17) about the common pivot axis (18) into an assistance pivot position, at which at the same time the other retention device (51, 52) in each case is pivoted into a receiving pivot position or into a transfer pivot position by means of a pivot movement of the associated pivot arm (16, 17) and **in that** the retention device (51, 52) which is pivoted into the assistance pivot position supports the securing of a sheet metal component (64, 65, 68, 69) to the retention device (51, 52) which has at the same time been pivoted into the receiving pivot position or the release of a sheet metal component (64, 65, 68, 69) from the retention device (51, 52) which has at the same time been pivoted into the transfer pivot position.

15. Processing program for operating a mechanical handling device (3) according to any one of claims 1 to 11, **characterised in that** there are provided control commands which result in a method according to claim 13 or claim 14 being carried out when the processing program is carried out on a numerical control unit (63) of the mechanical handling device (3).

## Revendications

1. Dispositif automatique de manipulation, conçu pour manier des pièces en tôle (64, 65, 68, 69) sur une machine-outil (2) destinée à l'usinage de tôles (11) par découpe, muni d'un bras pivotant (16) qui présente un axe de pivotement perpendiculairement auquel ledit bras pivotant (16) s'étend suivant sa direction longitudinale, et qui est muni d'un système de maintien apte à pivoter vers une position de prélèvement et vers une position de transfert, suite à un mouvement pivotant dudit bras pivotant (16) autour dudit axe de pivotement, sachant qu'une pièce en tôle (64, 65, 68, 69) peut être consignée à demeure sur ledit système de maintien, dans ladite position de prélèvement prise par pivotement, et que, dans ladite position de transfert prise par pivotement, une pièce en tôle (64, 65, 68, 69) consignée à demeure sur ledit système de maintien peut être libérée par ledit système de maintien,
**caractérisé par le fait**
**qu'**au moins un second bras pivotant (17) est prévu en plus du bras pivotant prévu en tant que premier bras pivotant (16),
**que** l'axe de pivotement forme un axe de pivotement (18) commun au premier bras pivotant (16) et au second bras pivotant (17), sachant que la direction longitudinale dudit second bras pivotant (17) s'étend perpendiculairement audit axe commun de pivotement (18), et sachant que ledit premier bras pivotant (16) et ledit second bras pivotant (17) peuvent pivoter autour dudit axe commun de pivotement (18) en étant découplés l'un de l'autre,
**qu'**un second système de maintien (52) est prévu sur le second bras pivotant (17), en plus du système de maintien prévu en tant que premier système de maintien (51), sur le premier bras pivotant (16), et
**que** le second système de maintien (52) est apte à pivoter vers une position de prélèvement et vers une position de transfert, suite à un mouvement pivotant du second bras pivotant (17) autour de l'axe commun de pivotement (18), sachant qu'une pièce en tôle (64, 65, 68, 69) peut être consignée à demeure sur ledit second système de maintien (52), dans ladite position de prélèvement prise par pivotement, et que, dans ladite position de transfert prise par pivotement, une pièce en tôle (64, 65, 68, 69) consignée à demeure sur ledit second système de maintien (52) peut être libérée par ledit second système de maintien (52).

2. Dispositif automatique de manipulation selon la revendication 1, **caractérisé par le fait que** le premier système de maintien (51) et le second système de maintien (52) sont aptes à pivoter autour de l'axe commun de pivotement (18), vers une position de prélèvement et vers une position de transfert, dans les limites d'un angle respectif de pivotement ; et **par le fait que** l'angle de pivotement dudit premier système de maintien (51) et l'angle de pivotement dudit second système de maintien (52) se chevauchent mutuellement.

3. Dispositif automatique de manipulation selon l'une des revendications précédentes, **caractérisé par le fait que** le premier bras pivotant (16) et le second bras pivotant (17) sont agencés avec décalage mutuel le long de l'axe commun de pivotement (18) ; et **par le fait que** ledit premier bras pivotant (16) et ledit second bras pivotant (17) peuvent se mouvoir l'un au-delà de l'autre au cours de mouvements pivotants visant à faire pivoter le premier système de maintien (51) et/ou le second système de maintien (52) vers une position de prélèvement, ou vers une position de transfert.

4. Dispositif automatique de manipulation selon l'une des revendications précédentes, **caractérisé par le fait que** le premier système de maintien (51) et le second système de maintien (52) sont aptes à pivoter, suite à des mouvements de pivotement du premier bras pivotant (16) et du second bras pivotant (17), vers des positions de transfert dans lesquelles une seule et même pièce en tôle (68) peut être consignée à demeure sur ledit premier système de maintien (51) et sur ledit second système de maintien (52).

5. Dispositif automatique de manipulation selon l'une des revendications précédentes, **caractérisé par le fait que** le premier système de maintien (51) peut être positionné dans la direction longitudinale du premier bras pivotant (16), et/ou le second système de maintien (52) peut être positionné dans la direction longitudinale du second bras pivotant (17).

6. Dispositif automatique de manipulation selon la revendication 5, **caractérisé par le fait que** ledit dispositif automatique de manipulation présente une structure de support (12) sur laquelle le premier bras pivotant (16) et le second bras pivotant (17) sont montés à pivotement autour de l'axe commun de pivotement (18) ; et **par le fait que** le premier système de maintien (51) peut être positionné dans la direction longitudinale dudit premier bras pivotant (16) étant donné que ledit premier bras pivotant (16) peut être ajusté suivant sa direction longitudinale vis-à-vis de la structure de support (12), conjointement audit premier système de maintien (51) ; et/ou **par le fait que** le second système de maintien (52) peut être positionné dans la direction longitudinale dudit second bras pivotant (17) étant donné que ledit second bras pivotant (17) peut être ajusté suivant
sa direction longitudinale vis-à-vis de ladite structure de support (12), conjointement audit second système de maintien (52).

7. Dispositif automatique de manipulation selon l'une des revendications précédentes, **caractérisé par le fait que** le premier système de maintien (51) peut être ajusté par rapport au premier bras pivotant (16) et/ou le second système de maintien (52) peut être ajusté par rapport au second bras pivotant (17), parallèlement à l'axe commun de pivotement (18).

8. Dispositif automatique de manipulation selon l'une des revendications précédentes, **caractérisé par le fait que** ledit dispositif automatique de manipulation présente une structure de support (12) sur laquelle le premier bras pivotant (16) et le second bras pivotant (17) sont montés à pivotement autour de l'axe commun de pivotement (18), au moyen d'un palier de pivotement (22, 24) respectif, sachant que ledit premier bras pivotant (16) et ledit second bras pivotant (17) incluant le palier de pivotement (22, 24) respectivement associé présentent, le long dudit axe commun de pivotement (18), un agencement décalé, et sachant qu'au moins un conduit ou un conducteur d'alimentation (61), dévolu à l'un (17) desdits bras pivotants et/ou au système de maintien (52) prévu sur ce dernier, franchit de part en part le palier de pivotement (22) de l'autre bras pivotant (16).

9. Dispositif automatique de manipulation selon la revendication 8, **caractérisé par le fait que** le premier bras pivotant (16) et le second bras pivotant (17) peuvent être entraînés en des mouvements pivotants, autour de l'axe commun de pivotement (18), au moyen d'un entraînement motorisé respectif (30, 31) imprimant des pivotements ; et **par le fait qu'**un conducteur d'alimentation dédié à l'entraînement (31) faisant pivoter l'un (17) des bras pivotants, matérialisant le conducteur d'alimentation (61) dévolu à l'un (17) desdits bras pivotants, franchit de part en part le palier de pivotement (22) de l'autre bras pivotant (16).

10. Dispositif automatique de manipulation selon la revendication 8 ou la revendication 9, **caractérisé par le fait que** le palier de pivotement (22) du premier bras pivotant (16) et/ou le palier de pivotement (24) du second bras pivotant (17) inclu(en)t une partie (21, 23) située côté structure de support, ainsi qu'une partie (25, 27) située côté bras pivotant, ladite partie (25, 27) dudit palier de pivotement, située côté bras pivotant, étant prévue sur une saillie latérale d'appui (26, 28) dudit premier bras pivotant (16) ou dudit second bras pivotant (17).

11. Dispositif automatique de manipulation selon l'une des revendications précédentes, **caractérisé par le fait que** le premier système de maintien (51) et/ou le second système de maintien (52) est (sont) apte(s) à pivoter, suite à un mouvement pivotant respectif du premier bras pivotant (16) et du second bras pivotant (17) autour de l'axe commun de pivotement (18), jusqu'à une position d'assistance dans laquelle l'autre système de maintien (51, 52) considéré est simultanément animé d'un pivotement jusqu'à une position de prélèvement ou jusqu'à une position de transfert, suite à un mouvement pivotant du bras pivotant (16, 17) associé ; et **par le fait que** ledit système de maintien (51, 52), animé d'un pivotement jusqu'à ladite position d'assistance, permet d'amplifier l'effet de consignation à demeure d'une pièce en tôle (64, 65, 68, 69) sur le système de maintien (51, 52) simultanément animé d'un pivotement jusqu'à ladite position de prélèvement, ou l'effet de libération d'une pièce en tôle (64, 65, 68, 69) par le système de maintien (51, 52) simultanément animé d'un pivotement jusqu'à ladite position de transfert.

12. Ensemble automatique dévolu à l'usinage de tôles (11) par découpe, comprenant
• une machine-outil (2) équipée d'un dispositif de découpage (8, 9) au moyen duquel des pièces en tôle (64, 65, 68, 69) peuvent être façonnées sous la forme de produits usinés, par usinage de coupe, à partir de pièces en tôle revêtant la forme de tôles brutes,
• ainsi qu'un dispositif automatique de manipulation (3), au moyen duquel des pièces en tôle (64, 65, 68, 69) peuvent être enlevées de ladite machine-outil (2) et/ou être délivrées à ladite machine-outil (2),
**caractérisé par le fait que**
le dispositif automatique de manipulation (3) est réalisé conformément à l'une des revendications 1 à 11.

13. Procédé automatique conçu pour manier des pièces en tôle (64, 65, 68, 69) sur une machine-outil (2) destinée à l'usinage de tôles (11) par découpe, mis en oeuvre au moyen d'un dispositif automatique de manipulation (3) conforme à l'une des revendications 1 à 11, **caractérisé par le fait que** le premier système de maintien (51) et le second système de maintien (52) sont animés de pivotements jusqu'à une position de prélèvement ou jusqu'à une position de transfert, suite à des mouvements pivotants mutuellement découplés, effectués par le premier bras pivotant (16) et par le second bras pivotant (17) autour de l'axe commun de pivotement (18) ; **par le fait qu'**une pièce en tôle (64, 65, 68, 69) est consignée à demeure sur ledit premier système de maintien (51) dans la position de prélèvement que ledit premier système de maintien (51) a prise par pivotement, et une pièce en tôle (64, 65, 68, 69) est consignée à demeure sur ledit second système de maintien (52) dans la position de prélèvement que ledit second système de maintien (52) a prise par pivotement ; et **par le fait qu'**une pièce en tôle (64, 65, 68, 69), consignée à demeure sur ledit premier système de maintien (51), est libérée dans la position de transfert que ledit premier système de maintien (51) a prise par pivotement, et une pièce en tôle (64, 65, 68, 69), consignée à demeure sur ledit second système de maintien (52), est libérée dans la position de transfert que ledit second système de maintien (52) a prise par pivotement.

14. Procédé automatique selon la revendication 13, **caractérisé par le fait que** le premier système de maintien (51) et/ou le second système de maintien (52) est (sont) animé(s) de pivotements, suite à un mouvement pivotant respectif du premier bras pivotant (16) et du second bras pivotant (17) autour de l'axe commun de pivotement (18), jusqu'à une position d'assistance dans laquelle l'autre système de maintien (51, 52) considéré est simultanément animé d'un pivotement jusqu'à une position de prélèvement ou jusqu'à une position de transfert, suite à un mouvement pivotant du bras pivotant (16, 17) associé ; et **par le fait que** ledit système de maintien (51, 52), animé d'un pivotement jusqu'à ladite position d'assistance, amplifie l'effet de consignation à demeure d'une pièce en tôle (64, 65, 68, 69) sur le système de maintien (51, 52) simultanément animé d'un pivotement jusqu'à ladite position de prélèvement, ou l'effet de libération d'une pièce en tôle (64, 65, 68, 69) par le système de maintien (51, 52) simultanément animé d'un pivotement jusqu'à ladite position de transfert.

15. Programme d'usinage dédié à l'actionnement d'un dispositif automatique de manipulation (3) conforme à l'une des revendications 1 à 11, **caractérisé par** la présence d'instructions de commande faisant en sorte qu'un procédé, conforme à la revendication 13 ou à la revendication 14, soit mis en oeuvre lorsque ledit programme d'usinage se déroule sur une unité de commande numérique (63) du dispositif automatique de manipulation (3).
